# EUROPEAN PATENT APPLICATION

(11) **EP 2 555 042 A1**
(43) Date of publication of application: **06.02.2013**
(21) Application number: 11762906.3
(22) Date of filing: 30.03.2011
(51) Int. Cl.: G02C 7/00, B05C 9/10, D06P 5/00, G02B 1/04, G02B 1/10

(54) **DYE APPLICATION DEVICE FOR PLASTIC LENS**

(30) Priority: 30.03.2010 JP 2010079642
(71) Applicant: Hoya Corporation, Tokyo 161-8525 (JP)
(72) Inventor: OOKUBO,Shigeki, Tokyo 161-8525 (JP); SHIMADA,Osamu, Tokyo 161-8525 (JP)
(74) Representative: Betten & Resch
(86) International application number: PCT/JP2011/058145
(87) International publication number: WO 2011/122682

(57) **Abstract**

A dye applying apparatus for a plastic lens according to this invention includes a conveyance device (15) which conveys a plastic lens while a surface to be dyed is exposed, and a modifying device (21) which is opposed to the surface to be dyed, and performs a modification treatment that improves the wettability on the surface to be dyed. This apparatus also includes a dye spraying device (22) which is opposed to the surface to be dyed on the downstream side of the modifying device (21) along the conveyance path of the conveyance device (15), and sprays and adheres dye particles to the surface to be dyed.

## Description

### Technical Field

The present invention relates to a dye applying apparatus for a plastic lens, which sprays and adheres dye particles to a plastic lens in a process of applying a dye to a plastic lens.

### Background Art

A method described in, for example, patent literature 1 has conventionally been available as a method of dyeing a plastic lens (to be simply referred to as a lens hereinafter). The dyeing method disclosed in patent literature 1 is performed by applying a dye to a lens using the inkjet method, and then heating the lens.

The dye is sprayed in the form of particulate droplets (to be simply referred to as dye particles hereinafter) from a nozzle head arranged above the lens. According to the general inkjet method, the dye particles are continuously sprayed from the nozzle head at a predetermined interval. In the method described in patent literature 1, upon a spray of dye particles from the nozzle head, the nozzle head and the lens move relative to each other so that a dye is applied to the entire surface of the lens to be dyed.

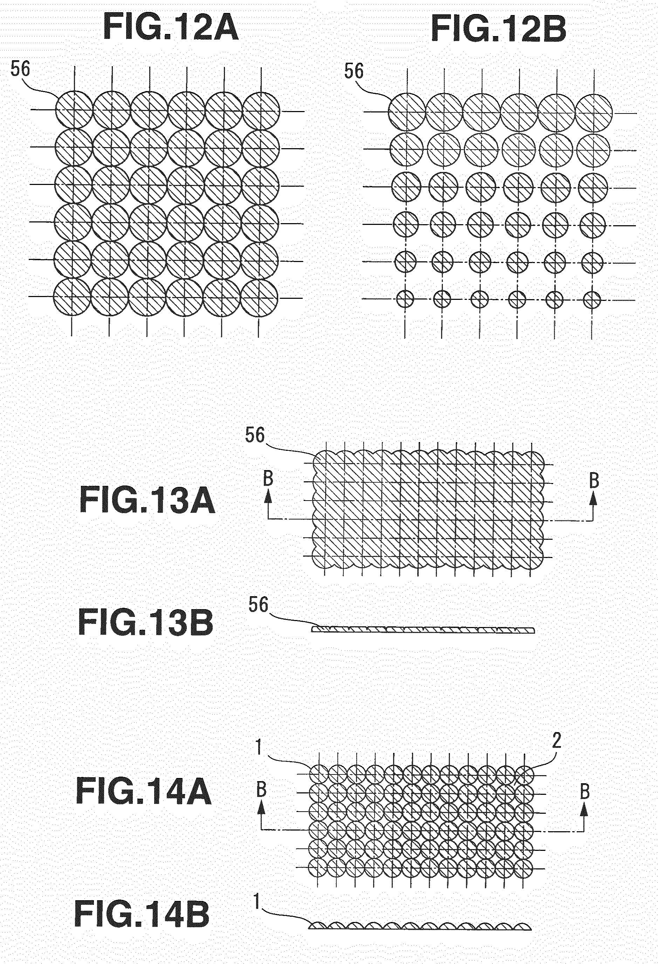

Dye particles which are sprayed from the nozzle head and reach the lens adhere to the surface of the lens one by one, as shown in Figs. 14A and 14B. Referring to Figs. 14A and 14B, reference numeral 1 denotes a dye particle. That is, the dye particle 1 adheres to the lens surface in a semispherical shape. Each dye particle 1 shown in Figs. 14A and 14B has a size that allows it be in contact with an adjacent dye particle 1. When the dye particles 1 each having this size adhere to the lens surface, the lens surface is partially exposed in regions 2 surrounded by the dye particles 1, as shown in Fig. 14A. The regions 2 are not dyed even if the lens is heated to make the dye penetrate into the lens.

### Related Art Literature

### Patent Literature

Patent Literature 1: Japanese Patent Laid-Open No. 8-20080

### Disclosure of Invention

### Problem to be Solved by the Invention

A lens dyed using the dyeing method disclosed in patent literature 1 may have a color different from a target color due to insufficient coloring. This is because the regions 2 surrounded by the dye particles 1 cannot be dyed even if the dye is applied to the entire lens surface so that adjacent dye particles 1 come into contact with each other, as shown in Fig. 14A.

Also, although a significant feature of the inkjet method lies in that dyes with different colors are sprayed from a plurality of inkjet nozzles so as to optimize the balance in amount of each dot, thereby producing various colors in appearance, although respective dots are independent of or partially mix with each other in practice. The ease of penetration of colorants in the dye into the lens varies in each individual color such as blue, red, and yellow. This supposedly results in dyeing in a color different from a target color as dyes with different colors do not uniformly mix with each other, depending on the type of plastic blank.

The present invention has been made in order to solve the above-mentioned problem, and has as its object to provide a dye applying apparatus for a plastic lens, which is capable of sufficiently dyeing a lens in a correct color.

### Means of Solution to the Problem

In order to achieve the above-mentioned object, according to the present invention, there is provided a dye applying apparatus for a plastic lens, comprising a conveyance device which conveys a plastic lens while a surface to be dyed is exposed, a modifying device which is opposed to the surface to be dyed, and performs a modification treatment that improves a wettability on the surface to be dyed, and a dye spraying device which is opposed to the surface to be dyed on a downstream side of the modifying device along a conveyance path of the conveyance device, and sprays and adheres dye particles to the surface to be dyed.

### Effects of the Invention

According to the present invention, since dye particles adhere to a surface to be dyed, which has a wettability improved by a modification treatment, they wet and spread on the surface to be dyed so that the dye flows even to regions surrounded by the dye particles. This makes it possible to reliably apply a dye to the entire surface to be dyed, thereby sufficiently dyeing a plastic lens free from unevenness in dye application.

Also, when dye particles wet and spread on the surface to be dyed, dyes which form adjacent dye particles mix with each other on the surface to be dyed. For example, if dye particles formed by dyes having different colors are adjacent to each other, a mixture of colors of these dyes is obtained. That is, since different colors are practically blended on the surface to be dyed, the lens can be dyed in a color that is the same as or very similar to a target color more reliably than the case wherein a color is represented by aligning dye particles.

Moreover, the dye applying apparatus for a plastic lens according to the present invention can continuously perform a modification treatment that improves the wettability of the surface to be dyed, and an operation of applying a dye to the modified surface to be dyed. Hence, the use of this dye applying apparatus for a plastic lens allows the manufacture of a plastic lens sufficiently dyed in a color that is the same as or very similar to a target color with a high productivity.

### Brief Description of Drawings

Fig. 1 is a schematic view for explaining the operation of a dye applying apparatus for a plastic lens according to the present invention;
Fig. 2A is a plan view showing a lens movement table;
Fig. 2B is a sectional view taken along a line B - B in Fig. 2A;
Fig. 3A is a plan view showing how plastic lenses are set on the lens movement table;
Fig. 3B is a sectional view taken along a line B - B in Fig. 3A;
Fig. 3C is a perspective view showing a lens holder;
Fig. 4 is a front view of a conveyance device in the dye applying apparatus for a plastic lens according to the present invention;
Fig. 5 is a side view of the conveyance device in the dye applying apparatus for a plastic lens according to the present invention;
Fig. 6 is a block diagram showing the configuration of a control device;
Fig. 7 is a flowchart for explaining a method of dyeing a plastic lens according to the present invention;
Fig. 8 is a front view showing the arrangement of a modification treatment device;
Fig. 9A is a view showing the state of the plastic lens after a modification treatment;
Fig. 9B is a view showing the state of the plastic lens after a dye applying operation;
Fig. 9C is a view showing the state of the plastic lens after another dye applying operation;
Fig. 9D is a view showing the state of the plastic lens after still another dye applying operation;
Fig. 10 is a front view showing the arrangement of the dye applying apparatus;
Fig. 11A is a plan view showing an adhesion mode of dye particles;
Fig. 11B is a plan view showing another adhesion mode of dye particles;
Fig. 11C is a plan view showing still another adhesion mode of dye particles;
Fig. 11D is a plan view showing still another adhesion mode of dye particles;
Fig. 12A is a view illustrating an example of the applying pattern of dye particles when the dye particles are arranged at a predetermined pitch in two directions;
Fig. 12B is a view illustrating another example of the applying pattern of dye particles when the dye particles are arranged so that their density gradually changes;
Fig. 13A is a plan view showing the state of a dye applied on a surface having undergone a surface modification treatment;
Fig. 13B is a sectional view taken along a line B - B in Fig. 13A;
Fig. 14A is a plan view showing how dye particles are adhered to a plastic lens using the conventional dyeing method; and
Fig. 14B is a sectional view taken along a line B - B in Fig. 14A.

### Best Mode for Carrying Out the Invention

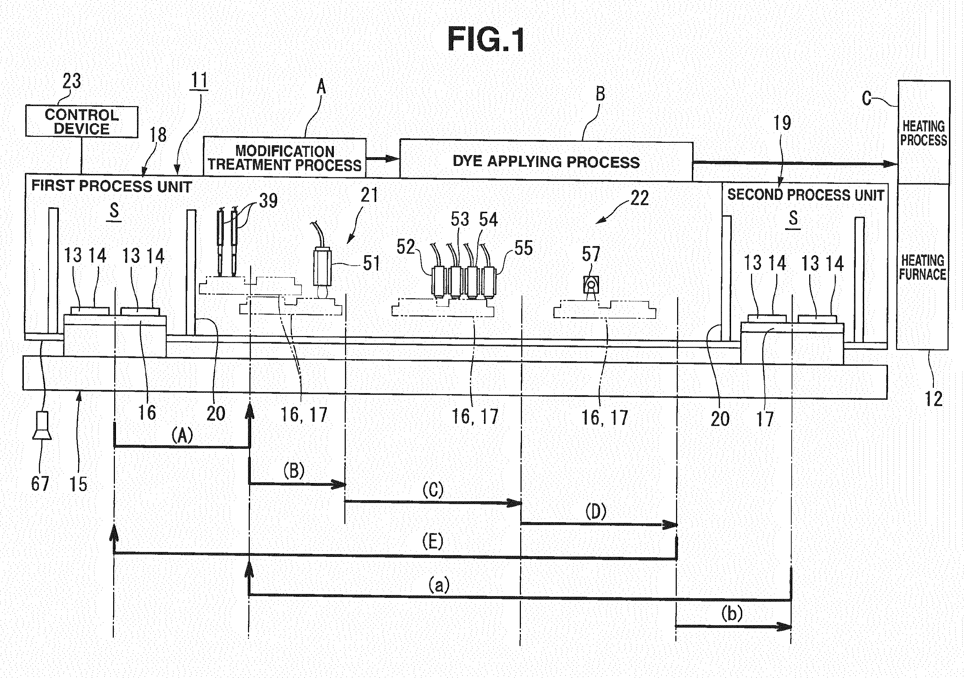

An embodiment of a dye applying apparatus for a plastic lens according to the present invention will be described in detail below with reference to Figs. 1 to 13A and 13B.
The dye applying apparatus for a plastic lens according to the present invention is configured to dye a plastic lens upon respective processes shown in Fig. 1. The respective processes include a modification treatment process A, dye applying process B. and heating process C (to be described later), as shown in Fig. 1. In this embodiment, the modification treatment process A and dye applying process B are performed by one dye applying apparatus 11 (to be described later), and the heating process *C is performed by a heating furnace 12. Although details are not shown, a heating furnace capable of heating a large number of plastic lenses (to be simply referred to as lenses hereinafter) 13 to a predetermined temperature at once or a continuous heating furnace is used as the heating furnace 12.

In the modification treatment process A, a modification treatment that improves the wettability is performed on a surface to be dyed 14 (lens surface) of the lens 13. This modification treatment is performed by, for example, a corona discharge treatment or an atmospheric pressure plasma treatment.
A corona discharge treatment is done by applying a high frequency, high voltage to a pair of electrodes (not shown) to generate corona discharge between the electrodes, and exposing the surface to be dyed 14 to an energy field produced by the corona discharge.

An atmospheric pressure plasma treatment is done by generating a plasma between a pair of electrodes, and exposing the surface to be dyed 14 to an energy field produced by the plasma. Note that a treatment method for improving the wettability of the lens 13 is not limited to a corona discharge treatment or a plasma treatment, and an ultraviolet surface treatment method which irradiates the lens 13 with ultraviolet rays, for example, can also be adopted.

In the dye applying process B, particles of a dye (to be simply referred to as dye particles hereinafter) are sprayed and adhered to the surface to be dyed 14. As a method of spraying dye particles, the inkjet method or the atomizing method, for example, is available. In this embodiment, as details will be described later, dye particles are applied to the surface to be dyed 14 using the inkjet method.

The dye used in this process can be a dye used in the conventionally known dip dyeing method or sublimation dyeing method can be used. Examples of a disperse dye used include Disperse Yellow 3, Disperse Yellow 33, Disperse Yellow 54, Disperse Yellow 122, Disperse Yellow 124, Disperse Yellow 128, Disperse Yellow 134, Disperse Yellow 140, Disperse Orange 5, Disperse Orange 37, Disperse Orange 93, Disperse Orange 103, Disperse Orange 112, Disperse Orange 134, Disperse Orange 370, Disperse Green 7, Disperse Violet 61, Disperse Violet 63, Disperse Brown 1, Disperse Brown 13, Disperse Blue 14, Disperse Blue 27, Disperse Blue 54, Disperse Blue 56, Disperse Blue 149, Disperse Blue 176, Disperse Blue 182, Disperse Blue 193, Disperse Red 60, Disperse Red 91, Disperse Red 146, Disperse Red 199, Disperse Red 202, Disperse Red 207, Disperse Red 204, and Disperse Red 291, and they can be used singly or as a mixture of two or more of them.

Examples of commercial products include Kayaset Blue 906 (available from Nippon Kayaku Co., Ltd.), Kayaset Brown 939 (available from Nippon Kayaku Co., Ltd.), Kayaset Red 130 (available from Nippon Kayaku Co., Ltd.), Kayalon Microester Red C-LS conc (available from Nippon Kayaku Nippon Kayaku Co., Ltd.), Kayalon Microester Red AQ-LE (available from Nippon Kayaku Co., Ltd.), Kayalon Microester Red DX-LS (available from Nippon Kayaku Co., Ltd.), Dianix Blue AC-E (available from Dystar Japan Co., Ltd.), Dianix Red AC-E 01 (available from Dystar Japan Co., Ltd.), Dianix Yellow AC-E new (available from Dystar Japan Co., Ltd.), Kayalon Microester Blue C-LS conc (available from Nippon Kayaku Co., Ltd.), Kayalon Microester Blue AQ-LE (available from Nippon Kayaku Co., Ltd.), Kayalon Microester Yellow AQ-LE (available from Nippon Kayaku Co., Ltd.), Kayalon Microester Yellow C-LS (available from Nippon Kayaku Co., Ltd.), and Kayalon Microester Blue DX-LS conc (available from Nippon Kayaku Co., Ltd.).

An embodiment of the dye applying apparatus 11 for a plastic lens, which is used to perform the modification treatment process A and the dye applying process B, will be described in detail next with reference to Figs. 1 to 5.
The dye applying apparatus 11 for a plastic lens according to this embodiment includes horizontally aligned process devices (to be described later). The dye applying apparatus 11 also includes a conveyance device 15 which conveys the lenses 13 along the path below the process devices. The conveyance device 15 conveys the lenses 13 while they are placed on first and second conveyance tables 16 and 17 as lens movement tables.

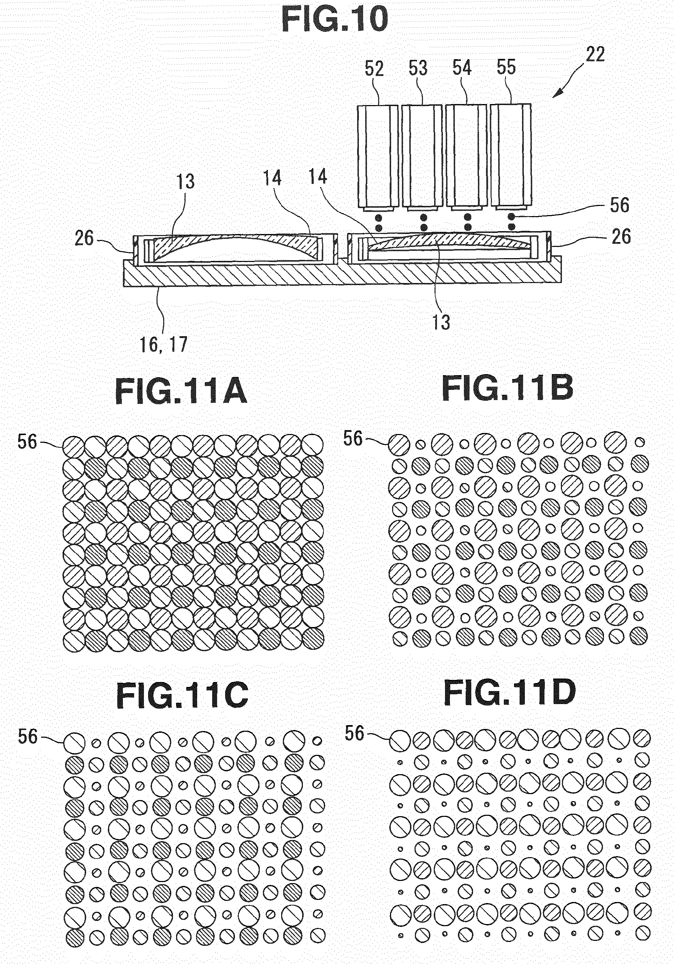

First and second process units 18 and 19 are provided at the two horizontal ends of the dye applying apparatus 11 to allow the operator (not shown) to load and unload the lenses 13. The first process unit 18 is provided at the left end of the dye applying apparatus 11 in Fig. 1, and the second process unit 19 is provided at the other, right end of the dye applying apparatus 11 in Fig. 11. Operation spaces S are formed in the first and second process units 18 and 19 so as to be divided by light curtains 20 and open toward the device front side (in the direction coming out of the paper surface of Fig. 1).

The lenses 13 are attached to and detached from the first conveyance table 16 in the first process unit 18. The lenses 13 are attached to and detached from the second conveyance table 17 in the second process unit 19. The two conveyance tables 16 and 17 are used in this way in order to individually load and unload the lenses 13 in the first process unit 18 and second process unit 19 so that, for example, the lenses 13 can be set in the second process unit 19 while the first process unit 18 performs a given process. Providing two process units in this way allows alternate processes, thus improving the manufacturing efficiency. Either of the process units 18 and 19 may be omitted, as a matter of course.

A corona discharge treatment device 21 and inkjet device 22 serving as the process devices are interposed between the first and second process units 18 and 19, as details will be described later. The corona discharge treatment device 21 performs the above-mentioned modification treatment process A. In this embodiment, the corona discharge treatment device 21 implements a "modifying device" defined in the present invention. The inkjet device 22 performs the above-mentioned dye applying process B. The inkjet device 22 implements a "dye spraying device" defined in the present invention.

In the first or second process unit 18 or 19, the lenses 13 are loaded into the dye applying apparatus 11 and set on the first or second conveyance table 16 or 17 of the conveyance device 15. The lenses 13 are conveyed to the corona discharge treatment device 21 and inkjet device 22 by the conveyance device 15, and returned to the first or second process unit 18 or 19, on which they have been set upon the loading, after the end of the processes by these devices. The dye applying apparatus 11 according to this embodiment includes a control device 23 for automatically performing the operations of the respective devices as described above.

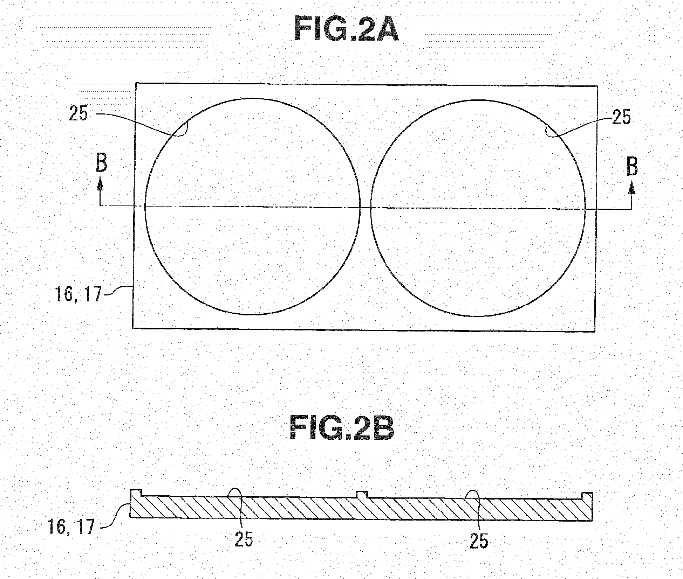

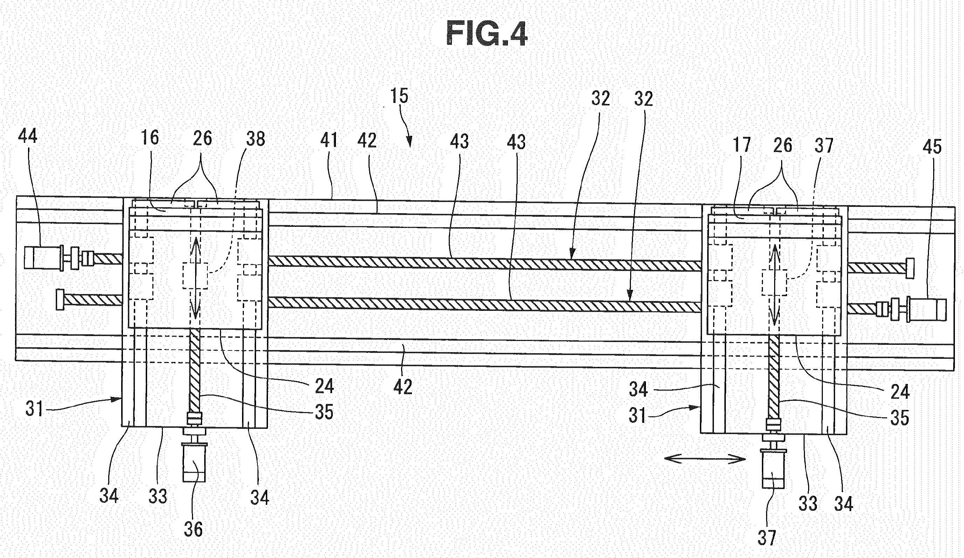

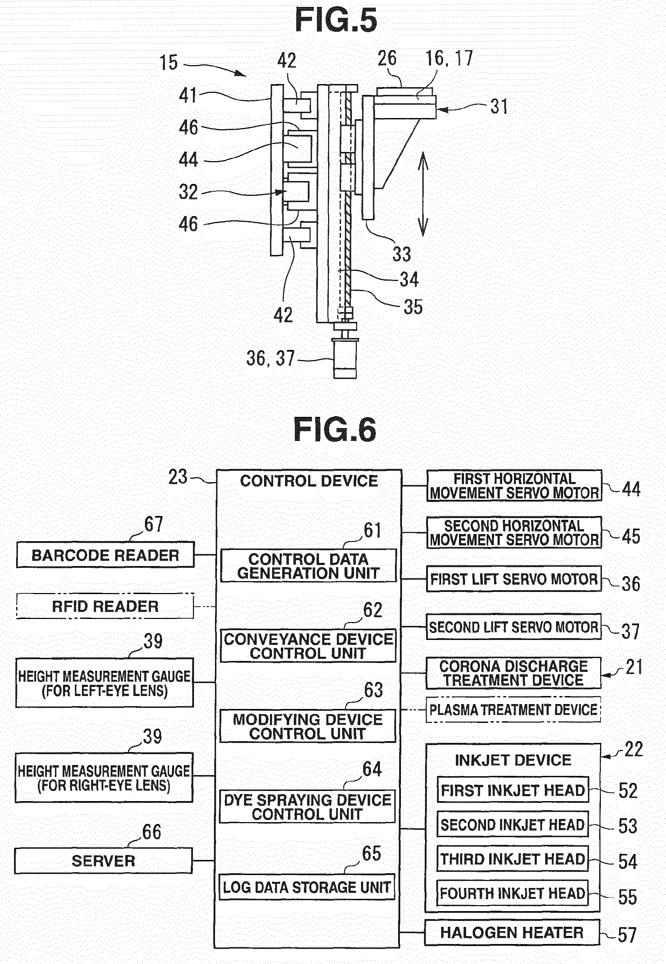

The conveyance device 15 has a function of vertically moving the first and second conveyance tables 16 and 17, and a function of horizontally moving them. Each of the first and second conveyance tables 16 and 17 is formed in a plate shape, as shown in Figs. 2A and 2B, and is provided at the upper end of a lift slider 24 (to be described later), as shown in Figs. 4 and 5.

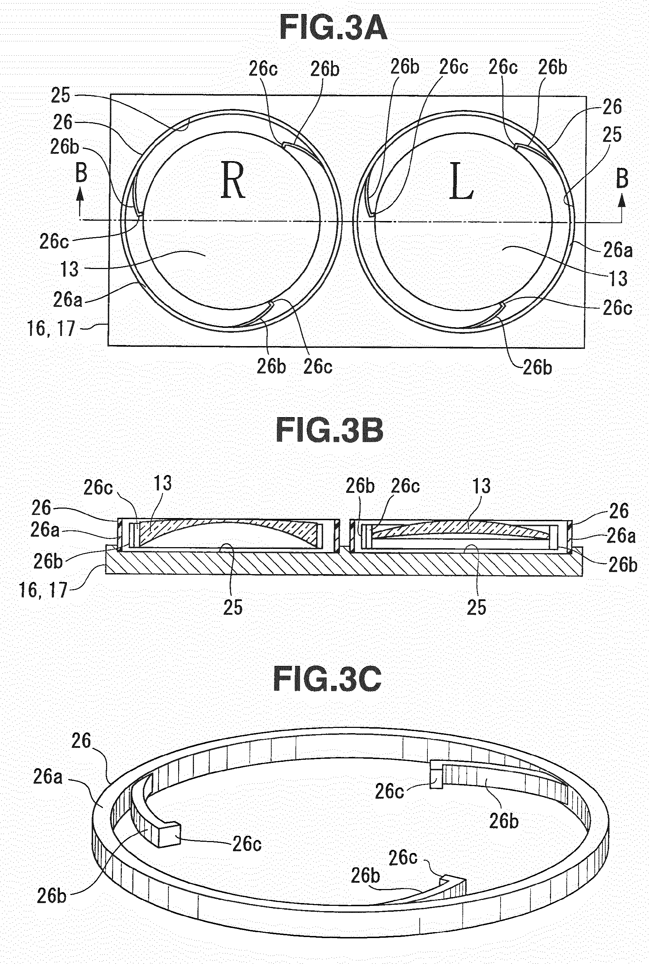

Two circular holes 25 are formed in the first and second conveyance tables 16 and 17 to open upwards, as shown in Figs. 2A and 2B. The circular holes 25 are formed to have a size that allows lens holders 26 for holding lenses can detachably be fitted in them, as shown in Figs. 3A and 3B. Each of the first and second conveyance tables 16 and 17 implements a "conveyance table" defined in the present invention.

The lens holder 26 includes a cylinder 26a and spring pieces 26b facing the hollow portion from the cylinder 26a, as shown in Fig. 3C. The cylinder 26a and spring pieces 26b are integrally formed by integral molding using plastic. The axial length of the cylinder 26a is slightly larger than the thickness of the lens 13.
The spring pieces 26b are provided at positions which divide the cylinder 26a into three equal circumferential parts. The spring pieces 26b extend in one circumferential direction from the cylinder 26a, and are curved so as to gradually come close to the axial center of the cylinder 26a toward the distal ends.

Grippers 26c are provided at the distal ends of the spring pieces 26b to press the outer peripheral surface of the lens 13 toward the radial center. The lens 13 is held within the central portion of the cylinder 26a upon being clamped by the three spring pieces 26b. The lens 13 can radially move within the plane of the cylinder 26a upon elastic deformation of the spring pieces 26b while it is held by the spring pieces 26b.

The lens holders 26 configured as described above are fitted in the circular holes 25 from above while holding the lenses 13. That is, the lenses 13 are set on the first and second conveyance tables 16 and 17 through the lens holders 26 by the so-called cartridge scheme. Of the two circular holes 25 formed in each of the first and second conveyance tables 16 and 17, a left-eye lens 13 is fitted in one circular hole 25, while a right-eye lens 13 is fitted in the other circular hole 25.

The lens holders 26 are set on the first and second conveyance tables 16 and 17 so that the surfaces to be dyed 14 of the lenses 13 (lens surfaces coated with a dye by the inkjet device 22) face up. Hence, the lenses 13 are supported by the conveyance tables 16 and 17 while the surfaces to be dyed 14 face up, and are conveyed by the conveyance device 15 while the surfaces to be dyed 14 are exposed. In this embodiment, after a dye is applied to the lenses 13 by the dye applying apparatus 11, the lenses 13 are conveyed to the heating furnace 12 without removing them from the lens holders 26.

The conveyance device 15 which conveys the first and second conveyance tables 16 and 17 includes two lift devices 31 which vertically move the conveyance tables 16 and 17, and two horizontal movement devices 32 which horizontally move them, as shown in Figs. 4 and 5.
The lift devices 31 adopt an arrangement which uses a ball screw mechanism to lift and lower the lift sliders 24 equipped with the first and second conveyance tables 16 and 17.

The lift slider 24 is vertically movably supported by a lift base plate 33 supported by the horizontal movement device 32 (to be described later). The direction in which the lift slider 24 moves is regulated by two guide rails 34 provided on the lift base plate 33. The guide rails 34 vertically extend and are horizontally spaced apart from each other.
The lift base plates 33 rotatably support vertically extending ball screw shafts 35, and are equipped with first and second lift servo motors 36 and 37 which rotate the ball screw shafts 35.

The ball screw shaft 35 is interposed between the two guide rails 34. The ball screw shaft 35 threadably engages with a ball screw nut 38 rotatably supported by the lift slider 24. That is, as the ball screw shafts 35 rotate upon driving of the first and second lift servo motors 36 and 37, the lift devices 31 lift or lower the lift sliders 24 together with the first and second conveyance tables 16 and 17, respectively.

The operations of the first and second lift servo motors 36 and 37 are controlled by the control device 23 (to be described later). The lift device 31 according to this embodiment includes two height measurement gauges 39 to detect the heights of the two lenses 13 set on each of the first and second conveyance tables 16 and 17. The height measurement gauges 39 are positioned above the conveyance path of the conveyance device 15 between the first process unit 18 and the corona discharge treatment device 21 (to be described later), as shown in Fig. 1.

The height measurement gauge 39 measures the amount of movement of a contactor provided at its lower end when this contactor moves upwards. The height measurement gauge according to this embodiment detects the height of the lens 13 based on the amount of movement of the contactor when this contactor is pushed up from below by the lens 13. The two height measurement gauges 39 are paired to measure the left- and right-eye lenses 13, respectively, as shown in Fig. 1.

Data detected by the height measurement gauges 39 are sent to the control device 23. The control device 23 controls the operation of the lift device 31 based on the heights of the lenses 13 detected by the height measurement gauges 39. That is, the control device 23 rotates the first and second lift servo motors 36 and 37 to adjust the heights of the lenses 13 such that the lenses 13 stand ready to be processed by the corona discharge treatment device 21 and inkjet device 22. In this manner, the lift device 31 including the height measurement gauges 39 implements an "interval adjusting device" defined in claim 4 of the present invention.

The horizontal movement devices 32 adopt an arrangement which uses a ball screw mechanism to horizontally move the lift base plates 33 of the lift devices 31, as shown in Figs. 4 and 5. In this embodiment, the horizontal movement device 32 implements a "movement device" defined in claim 5 of the present invention. The lift base plate 33 is horizontally movably supported by a horizontal movement base plate 41 formed to extend horizontally.

The direction in which the lift base plate 33 moves is regulated by two guide rails 42 provided on the horizontal movement base plate 41. The guide rails 42 horizontally extend and are vertically spaced apart from each other. The horizontal movement base plate 41 rotatably supports horizontally extending ball screw shafts 43, and is equipped with first and second horizontal movement servo motors 44 and 45 which rotate the ball screw shafts 43.

The guide rails 42 support the two lift base plates 33. The ball screw shaft 43 threadably engages with a ball screw nut 46 rotatably supported by the lift base plate 33. The two horizontal movement devices 32 according to this embodiment adopt an arrangement which shares the horizontal movement base plate 41 and guide rails 42. That is, the ball screw shafts 43, first and second horizontal movement servo motors 44 and 45, and ball screw nuts 46 are provided on each lift base plate 33.

The two ball screw shafts 43 are vertically aligned between the two guide rails 42. One end of the upper ball screw shaft 43 corresponding to the first process unit 18 is driven by the first horizontal movement servo motor 44. The other end of the lower ball screw shaft 43 corresponding to the second process unit 19 is driven by the second horizontal movement servo motor 45.

That is, the first conveyance table 16 horizontally moves as the upper ball screw shaft 43 rotates upon driving of the first horizontal movement servo motor 44. The second conveyance table 17 horizontally moves as the lower ball screw shaft 43 rotates upon driving of the second horizontal movement servo motor 45. The operations of the horizontal movement servo motors 44 and 45 are controlled by the control device 23 (to be described later).

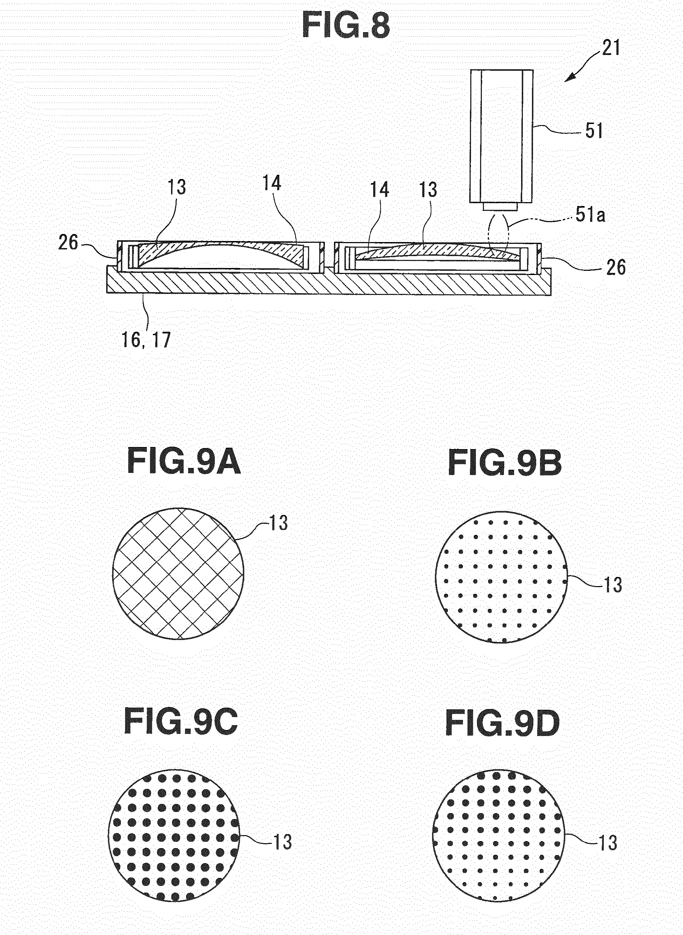

The corona discharge treatment device 21 includes one discharge head 51, as shown in Fig. 1. The discharge head 51 generates corona discharge 51a in the atmospheric air, as shown in Fig. 8. The discharge head 51 is disposed at a position having a predetermined height above the conveyance path along which the conveyance device 15 horizontally conveys the first and second conveyance tables 16 and 17. Also, the discharge head 51 is positioned to generate the corona discharge 51a downwards.

The corona discharge treatment device 21 according to this embodiment generates the corona discharge 51a using the discharge head 51 in the atmospheric air to bombard the surface to be dyed 14 of the lens 13 with electrons emitted by the discharge. In this case, the control device 23 controls the operation of the lift device 31 to optimize the heights of the discharge head 51 and lens 13, based on the height of the lens 13 detected by the height measurement gauge 39.
As the energy of the corona discharge 51a impinges on the lens 13 in this way, the surface to be dyed 14 is activated, and a polar group such as a carbonyl group is generated on the surface to be dyed 14, thereby improving the wettability of the surface to be dyed 14. As a corona discharge treatment device, Multidyne 1 {Model Number, available from Navistar Co., Ltd.), for example, can be used.

As a lens surface modifying device which can be built into the dye applying apparatus 11 according to the present invention, not only the corona discharge treatment device 21 but also, for example, an atmospheric pressure plasma treatment device or a surface modifying device which uses ultraviolet rays (neither is shown) is available.
If a plasma treatment device is used, the discharge head 51 is replaced with a plasma irradiation head. This plasma irradiation head is positioned to emit a plasma downwards. If a surface modifying device which uses ultraviolet rays is used, the discharge head 51 is replaced with an ultraviolet emitter. This ultraviolet emitter is positioned to emit ultraviolet rays downwards.

The inkjet device 22 includes first to fourth inkjet heads 52 to 55, as shown in Figs. 1 and 10. The first to fourth inkjet heads 52 to 55 are aligned in the direction in which the conveyance path extends. Also, each of the first to fourth inkjet heads 52 to 55 serves as an on-demand inkjet head which pressurizes a dye using a piezoelectric element (not shown) to spray it in the form of dye particles (particulate droplets) 56. Source dyes with different colors are supplied to the first to fourth inkjet heads 52 to 55.

The first to fourth inkjet heads 52 to 55 are disposed at predetermined positions while inkjet holes (not shown) from which dyes are sprayed face down. The predetermined positions mean positions having a predetermined height above the conveyance path. In this case as well, the control device 23 controls the operation of the lift device 31 to optimize the heights of the first to fourth inkjet heads 52 to 55 and lens 13, based on the height of the lens 13 detected by the height measurement gauge 39.

Although not shown, a plurality of inkjet nozzle holes are formed and arrayed in each of the first to fourth inkjet heads 52 to 55 at equal pitches. The array of these plurality of inkjet nozzle heads extends across a length equal to or larger than the outer diameter of the lens 13 in the horizontal direction (a direction perpendicular to the paper surface of Fig. 1) perpendicular to the direction in which the conveyance path extends. Also, as each of the first to fourth inkjet heads 52 to 55, an inkjet head capable of controlling the drop amount of one dye particle 56 and the amount of dye particles 56 which adhere to the same position is used. The control device 23 controls the drop amount of one dye particle 56 and the amount of dye particles 56 to obtain a target color.
As the model of each of the first to fourth inkjet heads 52 to 55, CF1 {Product Name, available from Toshiba Tec Corporation), for example, can be used.

Note that as each of the first to fourth inkjet heads 52 to 55, not only a piezoelectric inkjet head but also a thermal or electrostatic inkjet head can be used. Also, as the dye spraying device built into the dye applying apparatus 11 according to this embodiment, not only the inkjet device 22 but also an atomization applying device (not shown) can be used. However, it is preferable to use a piezoelectric dye spraying device in terms of suppressing cohesion of ink without requiring heating, and easy ink droplet control.

To quickly dry the dye applied to the lenses 13 by the first to fourth inkjet heads 52 to 55, the inkjet device 22 according to this embodiment includes a halogen heater 57, as shown in Fig. 1. The halogen heater 57 is disposed near and above the conveyance path of the lenses 13 on the downstream side of the first to fourth inkjet heads 52 to 55 in the conveyance direction (the left-to-right direction in Fig. 1), as shown in Fig. 1.

The control device 23 which controls the operations of the above-mentioned devices includes, for example, a control data generation unit 61, conveyance device control unit 62, modifying device control unit 63, dye spraying device control unit 64, and log data storage unit 65, as shown in Fig. 6. Also, the control device 23 is communicably connected to a server 66, and connected to a barcode reader 67. The server 66 has a function of storing all data required in applying a dye to each lens 13, and a function of sending data required by the control device 23 (specification data for each lens 13) to the control device 23.

The barcode reader 67 reads a barcode which records the specifications (for example, the color, density, index, and type of dyeing) for each lens 13. This barcode is recorded on an order sheet (not shown) formed for each lens 13, and is sent from a preceding-process device (not shown) to the dye applying apparatus 11, together with this lens 13. The barcode reader 67 can easily be operated by the operator in the first process unit 18 and second process unit 19. However, an RFID (Radio Frequency IDentification) reader may be used in place of the barcode reader 67.

The control data generation unit 61 reads the specifications for each lens 13 using the barcode reader 67, and acquires required data from the server 66 in actually applying a dye to this lens 13 so as to satisfy these specifications. The control data generation unit 61 then generates data for controlling the corona discharge treatment device 21 and inkjet device 22, based on the acquired data.

The conveyance device control unit 62 controls the operations of the four servo motors 36, 37, 44, and 45 of the conveyance device 15 so that the first and second conveyance tables 16 and 17 move from the first and second process units 18 and 19 to the height measurement gauges 39, corona discharge treatment device 21, inkjet device 22, and halogen heater 57 in the order named, and then return to the first and second process units 18 and 19. The first conveyance table 16 starts to be conveyed from the first process unit 18 and returns to it. The second conveyance table 17 starts to be conveyed from the second process unit 19 and returns to it. The dye applying apparatus 11 according to this embodiment alternately repeats a first conveyance mode in which the first conveyance table 16 conveys the lenses 13 to the corona discharge treatment device 21 and inkjet device 22, and a second conveyance mode in which the second conveyance table 17 conveys the lenses 13 to the corona discharge treatment device 21 and inkjet device 22.

The modifying device control unit 63 controls the operation of the corona discharge treatment device 21 based on the control data generated by the control data generation unit 61.
The dye spraying device control unit 64 controls the operations of the first to fourth inkjet heads 52 to 55 based on the control data generated by the control data generation unit 61. Also, the dye spraying device control unit 64 operates the halogen heater 57 for a predetermined period of time after the end of a dye applying operation by the inkjet device 22.
The log data storage unit 65 stores process condition data for each lens 13 in the form of a log file after the end of a dye drying process.

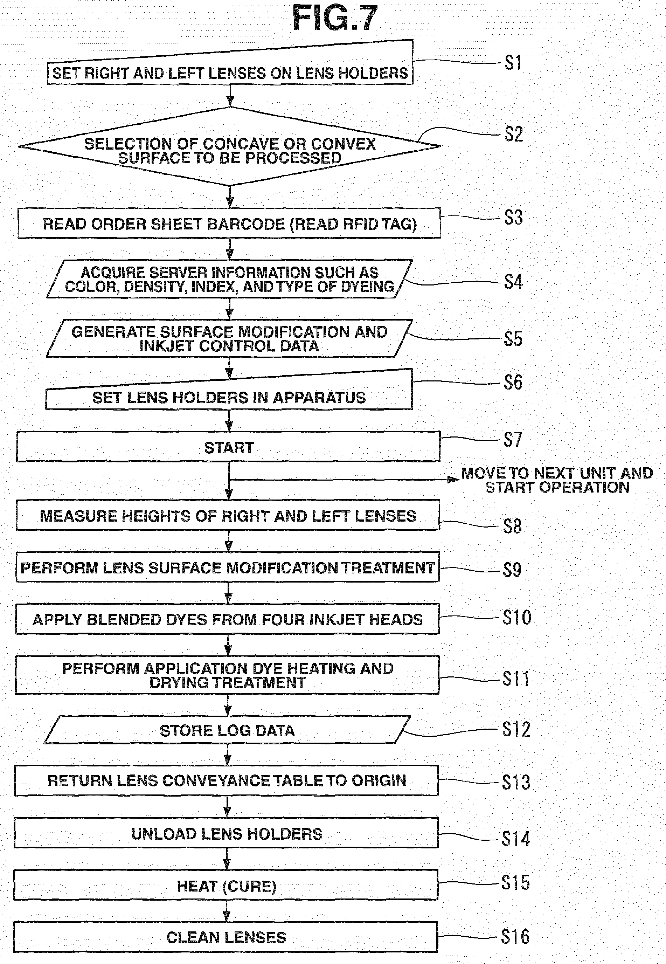

The operation of the dye applying apparatus 11 for a plastic lens according to this embodiment will be described with reference to a flowchart shown in Fig. 7. Note that among process boxes shown in Fig. 7, trapezoidal process boxes indicate human operations (manual input), and a rhombic process box indicates human decision. Also, rectangular process boxes indicate device operations (processes), and parallelogram process boxes indicate PC (control device) processes based on data.

In applying a dye to lenses 13 using the dye applying apparatus 11, first, the operator attaches left- and right-eye lenses 13 to the lens holder 26, as shown in step S1 of Fig. 7. This operation is performed in the first and second process units 18 and 19.

The operator selects a lens surface (concave or convex surface) to be coated with a dye in step S2, and reads a barcode on an order sheet corresponding to this lens surface into the control device 23 using the barcode reader 67 in step S3.
In step S4, the control device 23 acquires, from the server 66, data required in applying a dye in accordance with specifications read using the barcode reader 67. This data includes, for example, the color, density, index, and type of dyeing. In step S5, the control device 23 generates control data for controlling the corona discharge treatment device 21 and inkjet device 22.

After operating the barcode reader 67 as described above, the operator sets the lens holders 26 on the first and second conveyance tables 16 and 17, as shown in step S6. This operation is performed so that the surface to be dyed 14 faces up. After setting the lens holders 26 on the first and second conveyance tables 16 and 17 in this way, the operator operates, for example, a start switch (not shown) (step S7). At this time, when the lens holders 26 are set on the first conveyance table 16 standing by in the first process unit 18, the first conveyance table 16 is conveyed to the portion below the height measurement gauges 39 by the conveyance device 15, as indicated by an arrow (A) in Fig. 1.

In a conveyance line indicated by the arrow (A), first, the first and second conveyance tables 16 and 17 are lowered to a predetermined conveyance height by the lift devices 31. The first conveyance table 16 is moved to the portion below the height measurement gauges 39 by the horizontal movement devices 32, and then lifted by the lift device 31. On the other hand, in step S6, when the lens holders 26 are set on the second conveyance table 17 in the second process unit 19, the second conveyance table 17 is conveyed, as indicated by an arrow (a) in Fig. 1. That is, the second conveyance table 17 moves to the portion below the height measurement gauges 39 upon passing below the inkjet device 22 and corona discharge treatment device 21, and then lifts.

After operating the start switch in step S7, the operator moves to the other process unit, in which he or she performs operations shown in steps S1 to S3, S6, and S7. Note that the operator operates the start switch after lenses 13 having undergone a dye applying process are returned to one process unit.

The lift operation of the lift devices 31 continues until the contactors of the height measurement gauges 39 are pushed up by the lenses 13. At this time, in step S8, the control device 23 detects the heights of the lenses 13 based on the data detected by the height measurement gauges 39. This height detection is performed for each of the left- and right-eye lenses 13.
After the height detection is performed in this way, the conveyance device 15 conveys the first conveyance table 16 or second conveyance table 17 to the corona discharge treatment device 21, as indicated by an arrow (B) in Fig. 1.

More specifically, the conveyance device 15 first lowers the first or second conveyance table 16 or 17 to the same height as that of the process position of the corona discharge treatment device 21, and then horizontally moves it to the process position of the corona discharge treatment device 21.
After the first or second conveyance table 16 or 17 is conveyed to the process position of the corona discharge treatment device 21, the corona discharge treatment device 21 performs a modification treatment of the lenses 13 (step S9), as shown in Fig. 8.

This modification treatment is performed while the first or second conveyance table 16 or 17 is conveyed by the conveyance device 15 to the downstream side in the conveyance direction at a predetermined speed. This modification treatment is uniformly performed on the entire surface to be dyed 14, as shown in Fig. 9A. Figs. 9A to 9D are plan views of surfaces to be dyed 14. Referring to Fig. 9A, a portion having undergone a modification treatment is indicated by a hatched region. The surface to be dyed 14 having undergone this modification treatment has both a higher activity and a higher wettability for a dye. Such an effect can similarly be obtained when a plasma treatment or an ultraviolet surface treatment is performed as well. Also, the surface to be dyed 14 can be cleaned by the above-mentioned modification treatment.

After the end of the modification treatment, the conveyance device 15 conveys the first or second conveyance table 16 or 17 from the corona discharge treatment device 21 to the inkjet device 22, as indicated by an arrow (C) in Fig. 1. At this time, the lift device 31 of the conveyance device 15 adjusts the height of the first or second conveyance table 16 or 17 so that the interval between the surface to be dyed 14 and each of the first to fourth inkjet heads 52 to 55 becomes equal to a predetermined interval. Also, the horizontal movement device 32 of the conveyance device 15 conveys the first or second conveyance table 16 or 17 to the downstream side in the conveyance direction at a predetermined speed.

At this time, the first or second conveyance table 16 or 17 enters the portion below the first to fourth inkjet heads 52 to 55 at a predetermined speed from the upstream side of the first to fourth inkjet heads 52 to 55 in the conveyance direction, and passes below the first to fourth inkjet heads 52 to 55 at, for example, a constant speed.

The inkjet device 22 sprays dye particles 56 in accordance with the above-mentioned specifications when the first or second conveyance table 16 or 17 passes below it (step S10). The dye particles 56 fly in the air from the first to fourth inkjet heads 52 to 55, and adhere to the surface to be dyed 14.
The inkjet device 22 according to this embodiment can apply a dye in an arbitrary pattern at an arbitrary density by changing, for example, the size, number, and applying pattern of dye particles 56 which adhere to the surface to be dyed. Also, compared to the conventional dip dyeing method, the direct dyeing scheme which uses the inkjet method applies only a required amount of dye as sealed completely, and therefore prevents deterioration of the dye itself and a change in additive content, thus making it possible to suppress cohesion and deterioration of dye colorants upon heating of the dye.

For example, a dye can be applied at a low density, as shown in Fig. 9B, while it can be applied at a high density, as shown in Fig. 9C. In applying a dye at a high density in this way, the dye particles 56 are adhered to the surface to be dyed 14 at a high density, as shown in Fig. 12A. As each of the first to fourth inkjet heads 52 to 55 which can achieve this operation, an inkjet head capable of changing the drop amount of one dye particle 56 on the order of pl, and changing the amount of dye particles 56 applied to one portion is desired.

In applying a dye to obtain an arbitrary color at an arbitrary density, applying patterns as shown in, for example, Figs. 11A to 11D can be employed. Referring to Figs. 11A to 11D, dye particles 56 having the same color are represented by the same hatching pattern. A wide variety of dye applying operations can be performed by changing, for example, the color, size, amount, and position of dye particles 56, as shown in Figs. 11A to 11D.

When a dye is to be applied so that its density smoothly continuously changes (changes by gradation), the size of dye particles 56 is gradually changed, as shown in Fig. 12B. In the case of Fig. 12B, the drop amount of one dye particle 56 and the amount of dye particles 56 sequentially reduce from the upper side to the lower side in Fig. 12B. In applying a dye in this way, the direction in which the lenses 13 are conveyed is the vertical or horizontal direction of Fig. 12B. Note that when the lenses 13 are conveyed in the horizontal direction of Fig. 12B, the drop amount of one dye particle 56 and the amount of dye particles 56 can be maintained constant in the respective spray portions of the first to fourth inkjet heads 52 to 55.

Also, when gradient dyeing is to be performed on the lenses 13, the control device 23 can use, in accordance with the shapes and desired designs of the lenses 13, various control methods including an operation of not only controlling the drop amount of one dye particle and amount of dye particles in each of the first to fourth inkjet heads 52 to 55, but also controlling the motions of the horizontal movement devices 32 to set the lens movement speed variable, and an operation of setting the first to fourth inkjet heads 52 to 55 to uniformly apply a dye to the entire surfaces while the movement speed of only the horizontal movement devices 32 are set variable before and after gradient lines.

The surface to be dyed 14 having the dye particles 56 adhered to it has a wettability improved by a modification treatment. Hence, the dye particle 56 adhered to the surface to be dyed 14 does not maintain a semispherical shape, unlike the conventional method.
The dye particles 56 wet and spread on the surface to be dyed 14, as shown in Figs. 13A and 13B. That is, undyed regions {see Fig. 14A} surrounded by the dye particles 56 are absent, as shown in Fig. 13A. Also, the height of the dye particles 56 lowers, so a dye is applied in a film shape having an almost constant thickness, as shown in Fig. 13B. When the dye particles 56 wet and spread on the surface to be dyed 14 in this way, dyes which form adjacent dye particles 56 mix with each other on the surface to be dyed 14. As a result, since a target color can be formed on the surface to be dyed 14, a more uniform color can penetrate into the lens than in the conventional method of directly applying a dye to the surface to be dyed using, for example, the inkjet scheme.

After a dye is applied in this way, a drying treatment is performed, as shown in step S11 of the flowchart shown in Fig. 7. At this time, the conveyance device 15 conveys the first or second conveyance table 16 or 17 to the portion below the halogen heater 57, and stops it, as indicated by an arrow (D) in Fig. 1. Then, the lift device 31 of the conveyance device 15 adjusts the height of the first or second conveyance table 16 or 17 so that the interval between the surface to be dyed 14 and the halogen heater 57 becomes equal to a predetermined interval.

After each lens 13 is conveyed to the portion below the halogen heater 57, the halogen heater 57 heats the surface to be dyed 14 for a period of time taken to dry the dye on the surface to be dyed 14. After the end of heating, the control device 23 stores, in the form of a log file, process condition data of the lens 13 located below the halogen heater 57 (the lens 13 to be coated with a dye this time) (step S12). This log file can be used to refer to the manufacturing history.

After the control device 23 stores a log file, the conveyance device 15 returns the first or second conveyance table 16 or 17 to the first or second process unit 18 or 19, as shown in step S13. At this time, the first conveyance table 16 returns from the portion below the halogen heater 57 to the first process unit 18, as indicated by an arrow (E) in Fig. 1. The second conveyance table 17 returns to the second process unit 19, as indicated by an arrow (b) in Fig. 1.
When a dye is also to be applied to the lower surfaces of the lenses 13 after the first or second conveyance table 16 or 17 returns to the first or second process unit 18 or 19, the operator turns over the lens holders 26 and sets them on the first or second conveyance table 16 or 17. The dye applying apparatus 11 repeats the same operations as mentioned above in step S3 and subsequent steps. In the case of double-sided dyeing, the above-mentioned positioning mechanism for the lens holders 26 is capable of line control at the time of gradient dyeing, so the levelness of the rotation axis is guaranteed on the reception side of the lens holders 26 even when the lens vertical direction is switched between convex and concave surfaces.

When the operation of applying a dye to the lenses 13 is complete, the operator unloads the lens holders 26 from the first or second conveyance table 16 or 17, as shown in step S14.
The lenses 13 are removed from the lens holders 26 and conveyed to the heating furnace 12 (step S15). The lenses 13 are heated in the heating furnace 12, thereby curing them while the dye has penetrated into them. After the heating of the lenses 13 by the heating furnace 12 ends, the lenses 13 are cleaned (step S16) and conveyed to a process subsequent to the dyeing process.

In the method of dyeing a lens using the dye applying apparatus 11 shown in this embodiment, the dye particles 56 are adhered to the surface to be dyed 14 having a wettability improved by a modification treatment, and then the lens 13 is cured by heating. Therefore, the dye particles 56 wet and spread on the surface to be dyed 14 so that the dye flows and spreads even to the regions surrounded by the dye particles 56.

Hence, the dye applying apparatus 11 according to this embodiment can reliably apply a dye to the entire surface to be dyed 14 of the lens 13, thereby sufficiently dyeing the lens 13 free from unevenness in dye application. Also, when the dye particles 56 wet and spread on the surface to be dyed 14, dyes which form adjacent dye particles 56 mix with each other on the surface to be dyed 14. If, for example, dye particles 56 formed by dyes having different colors are adjacent to each other, a mixture of colors of these dyes is obtained. That is, since different colors are practically blended on the surface to be dyed 14, the lens 13 can be dyed in a color that is the same as or very similar to a target color more reliably than the case wherein a color is represented by aligning dye particles 56.

The dye applying apparatus 11 for a plastic lens according to this embodiment can continuously perform a modification treatment that improves the wettability of the surface to be dyed 14, and an operation of applying a dye to the modified surface to be dyed 14. Hence, the use of the dye applying apparatus 11 allows the manufacture of a lens 13 sufficiently dyed in a color that is the same as or very similar to a target color with a high productivity.

In this embodiment, the wettability of the surface to be dyed 14 is improved by, for example, a corona discharge treatment or a plasma treatment. This makes it possible to easily keep the surface to be dyed 14 cleaner than the case wherein a chemical solution is used to improve the wettability. Especially a corona discharge treatment or a plasma treatment allows a dye to easily penetrate into the lens 13, so the dye can be applied with a higher quality, and the dye density and the pattern size can be increased even for a highly refractive lens having a refractive index higher than 1.7, which is difficult to dye.

In this embodiment, a process of spraying and adhering dye particles to the surface to be dyed 14 of the lens 13 is performed by the inkjet method using the inkjet device 22. This makes it possible to easily perform a wide variety of dye applying operations. In addition, since the mixing ratio of a dye and the drop amount of one dye particle 56, for example, can be managed using numerical values, it is possible not only to dye the lens 13 in various dyeing patterns but also to manufacture a lens 13 with good reproducibility by dyeing it in the same dyeing pattern, although it can hardly be manufactured by the conventional dip dyeing method.

The dye applying apparatus 11 according to this embodiment includes the lift device 31 (interval adjusting device) which adjusts the interval between the surface to be dyed 14 and each of the corona discharge treatment device 21 and inkjet device 22 to a predetermined interval. Hence, a modification treatment and a dye applying operation are performed under optimum conditions. Therefore, according to this embodiment, a modification treatment and a dye applying operation are reliably performed, thereby providing a dye applying apparatus 11 capable of applying a dye with high quality.

The conveyance device 15 according to this embodiment includes the first and second conveyance tables 16 and 17 which support the lenses 13 while the surfaces to be dyed 14 face up, and the horizontal movement devices 32 which horizontally move the first and second conveyance tables 16 and 17. With this arrangement, the lenses 13 are conveyed while being stably supported. In addition, the dye particles 56 sprayed from the inkjet device 22 adhere to the surface to be dyed 14 upon flying without working against gravity. Hence, the dye applying apparatus 11 including the conveyance device 15 can more reliably perform a modification treatment and a dye applying operation with high accuracy.

The dye applying apparatus 11 according to this embodiment includes the first and second conveyance tables 16 and 17, and can adopt two conveyance modes. In the first conveyance mode, the first conveyance table 16 conveys the lenses 13 to the corona discharge treatment device 21 and inkjet device 22. In the second conveyance mode, the second conveyance table 17 conveys the lenses 13 to the corona discharge treatment device 21 and inkjet device 22.

The dye applying apparatus 11 according to this embodiment includes the control device 23 which controls the operations of the respective devices so as to alternately repeat the first conveyance mode and the second conveyance mode. With this arrangement, while the corona discharge treatment device 21 and inkjet device 22 operate, the operator can move from one process unit to the other process unit to set the next lenses 13 on the first or second conveyance table 16 or 17. Hence, according to this embodiment, a dye applying apparatus 11 with high process capability can be provided.

Although an example in which a dye is applied to the surface to be dyed 14 of the lens 13 while the surface to be dyed 14 faces up has been given in the above-mentioned embodiment, holding the lens 13 in an upright posture makes it possible to apply a dye while the surface to be dyed 14 faces sideways. Also, the interval between the lens 13 and each of the modifying device and dye spraying device can be adjusted upon movement of the modifying device and dye spraying device relative to the lens 13.

### Explanation of the Reference Numerals and Signs

11... dye applying apparatus for plastic lens, 12... heating furnace, 13... plastic lens, 14... surface to be dyed, 15... conveyance device, 16... first conveyance table, 17... second conveyance table, 18... first process unit, 19... second process unit, 21... corona discharge process device, 23... control device, 26... lens holder, 31... lift device, 32... horizontal movement device, 51... discharge head, 52 - 55... first to fourth inkjet heads, 56... dye particle, 57... halogen heater.

## Claims

1. A dye applying apparatus for a plastic lens, comprising:
a conveyance device which conveys a plastic lens while a surface to be dyed is exposed;
a modifying device which is opposed to the surface to be dyed, and performs a modification treatment that improves a wettability on the surface to be dyed; and
a dye spraying device which is opposed to the surface to be dyed on a downstream side of said modifying device along a conveyance path of said conveyance device, and sprays and adheres dye particles to the surface to be dyed.

2. A dye applying apparatus for a plastic lens according to claim 1, wherein said modifying device serves as one of a corona discharge treatment device and a plasma treatment device.

3. A dye applying apparatus for a plastic lens according to claim 1, wherein said dye spraying device includes an inkjet dye spraying device.

4. A dye applying apparatus for a plastic lens according to claim 1, further comprising an interval adjusting device which adjusts an interval between the surface to be dyed and each of said modifying device and said dye spraying device to a predetermined interval.

5. A dye applying apparatus for a plastic lens according to claim 1, wherein said conveyance device includes a conveyance table which supports the plastic lens while the surface to be dyed faces up, and a movement device which horizontally moves said conveyance table.
